# EUROPEAN PATENT APPLICATION

(11) **EP 3 091 437 A1**
(43) Date of publication of application: **09.11.2016**
(21) Application number: 15166898.5
(22) Date of filing: 08.05.2015
(51) Int. Cl.: G06F 11/36

(54) **METHOD AND APPARATUS FOR MONITORING A CONTROL FLOW OF A COMPUTER PROGRAM**

(71) Applicant: ROBERT BOSCH GMBH, 70442 Stuttgart (DE)
(72) Inventor: Plumbridge, Gary, York, YO24 3JE (GB); Tilsner, Heinz, 70469 Stuttgart (DE); Morgan, Gary, Thixendale, YO17 9TG (GB)

(57) **Abstract**

Method (10) for monitoring a control flow of an imperative computer program, characterized in that
- the program is annotated (11) with calls to a monitor, each call by a thread indicating the thread,
- the program and the monitor are scheduled for execution (12) by an operating system, and,
- upon receiving the call, the monitor verifies (13) the thread by means of the operating system.

## Description

The present invention pertains to a method for monitoring a control flow of an imperative computer program. The present invention further pertains to corresponding apparatus, a corresponding computer program as well as a corresponding storage medium.

### State of the art

In computer science, control flow or flow of control refers to the specification of the order in which the individual statements, instructions, or function calls of an imperative program are executed or evaluated. The emphasis on explicit control flow distinguishes an imperative programming language from a declarative programming language.

JP S5739456 A discloses an early low-level program device for monitoring the control flow of a program. To this end, when operation of some task has ended, in case of deriving a program bus to reach the program, a trigger command is given to the side of the CPU by pushing a branch trace start key of an operator's panel. As a result, a microprogram control part extracts a program address in order from the present one extending from the highest rank memory area of a stack register to the lowest rank area, and transfers it to a display part of the panel. In this way, a program bus is grasped by tracing the branch back to the past and tracing the branch locus extending from a program address which has ended at present, to a program which has been executed previously.

US 7168065 B1 proposes a more advanced method for monitoring program flow to verify execution of proper instructions by a processor such as for an embedded anti-lock braking system (ABS). To this end, a sequence of instructions is transmitted to the processor to execute the monitored program. These instructions are analyzed, and the result of the analysis is verified by referring to reference data recorded with the program. The reference data can include a value predetermined in such a way as to correspond to the result of the analysis produced during the monitoring process only if all the instructions have been actually analyzed during the program flow.

Finally, in an attempt to meet the requirements for logical program flow monitoring facilities imposed by AUTOSAR R4.0, WO 2009154498 suggests a method for integrity monitoring within a multi-tasking environment comprising: preprocessing source files during compile time; identifying all basic blocks and signing them with signatures during compile time; analyzing language constructions and linking nodes according to syntactically allowable program flow during compile time; transmitting a control graph to a monitoring process or putting it into a shared memory during runtime; posting on each basic block a signature to a signatures stream for each task during runtime and switching among the signatures streams and checking during run time that the signatures make an allowable path.

### Disclosure of the invention

The present invention provides a method for monitoring a control flow of an imperative computer program, corresponding apparatus, a corresponding computer program as well as a corresponding storage medium according to the independent claims.

An embodiment of the invention bears the advantage that a first class of errors is correctly identified those conventional monitoring subsystems, while being able to perform program flow monitoring in general, will report incorrectly by design. Dependent claims recite advantageous refinements of and improvements to the basic principle of claim 1. For instance, it may be provided that the program comprises basic blocks of execution with predetermined transitions between the blocks; when the program is annotated, a control flow graph is created for each thread, the graph comprising nodes representing the blocks and arcs representing the transitions; the monitor stores the graph; each call from a block further indicates the block; upon receiving at least two subsequent calls, the monitor detects the transition between the blocks; and the monitor matches the transition to an arc. If the monitor detects that the monitored code departs from the digraph then it is assumed that there is an error in the monitored code. Therefore errors in the flow of control of the monitored code can be detected.

According to a further aspect of the invention, it may be provided that, when the graph is created, a worst-case execution time of a block is assigned to the node representing the block; upon verifying the thread, the monitor times the execution of the thread; and the monitor verifies the execution time. This way, a second class of errors is correctly identified that known monitoring subsystems will be unable to detect.

### Brief description of the drawings

Embodiments of the inventions are illustrated in the drawings and explained in more detail in the following description, wherein:
Figure 1 shows the flowchart of a method according to a first embodiment.
Figure 2 shows a control flow graph for a program comprising two threads of execution.
Figure 3 shows a first error in the program of Figure 2.
Figure 4 shows a second error in the program of Figure 2.
Figure 5 shows an improved control flow graph.
Figure 6 schematically shows an electronic control unit according to a second embodiment.

Similar reference characters denote corresponding features consistently throughout the attached drawings.

### Embodiments of the invention

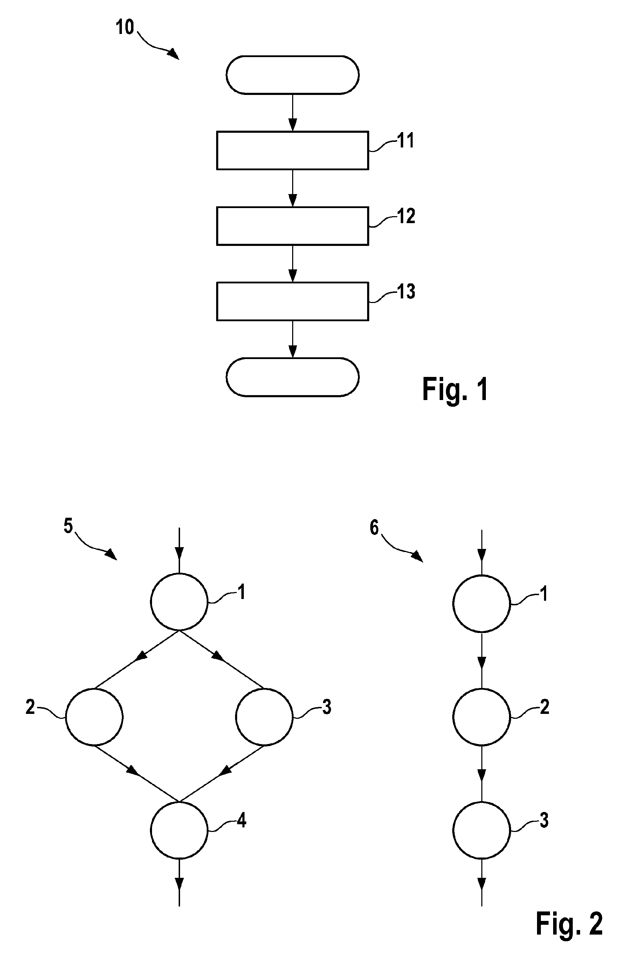

Figure 1 illustrates a method 10 for monitoring a control flow of an imperative computer program comprising threads of execution. In conformance with the terminology of computer science, by thread of execution is meant the smallest sequence of programmed instructions that can be managed independently by a scheduler, which is typically a part of the operating system (OS). The implementation of threads and processes differs between operating systems, but in most cases a thread is a component of a process, which in turn is an instance of the program being executed. Multiple threads can exist within the same process and share resources such as memory, while different processes do not share these resources. In the following, the term "thread" is used in a broad sense, encompassing interrupt handlers and other tasks as well as traditional threads.

According to the given embodiment, the program is annotated (11) with calls to a monitor, each call by a thread indicating the thread. The program and the monitor are scheduled for execution 12 by an operating system, and, upon receiving the call, the monitor verifies (13) the thread by means of the operating system.

Figure 2 elucidates the method 10 in further detail. To this end, it may be assumed that the program, like any imperative computer program, is composed of basic blocks of execution 12. In computing, by basic block is meant a portion of the code within the program with only one entry point and only one exit point, making that portion highly amenable to analysis. Predetermined transitions between the blocks define the valid flow of control through the program.

When the program is annotated (11), a so-called control flow graph (CFG) is created for each of two threads 5, 6 and stored by the monitor, the graph comprising nodes 1, 2, 3, 4 representing the blocks and arcs representing the transitions. Such control flow graph is commonly used in computer science as a representation, using the notation of a directed graph or digraph, of all paths that might be traversed through the program during its execution 12.

When the monitored code runs, it calls the monitor identifying the current thread 5, 6 and the position reached in the digraph. The monitor compares the sequence of calls with its internally-stored digraph. If the monitor detects that the monitored code departs from the digraph then it is assumed that there is an error in the monitored code. Therefore errors in the flow of control of the program can be detected.

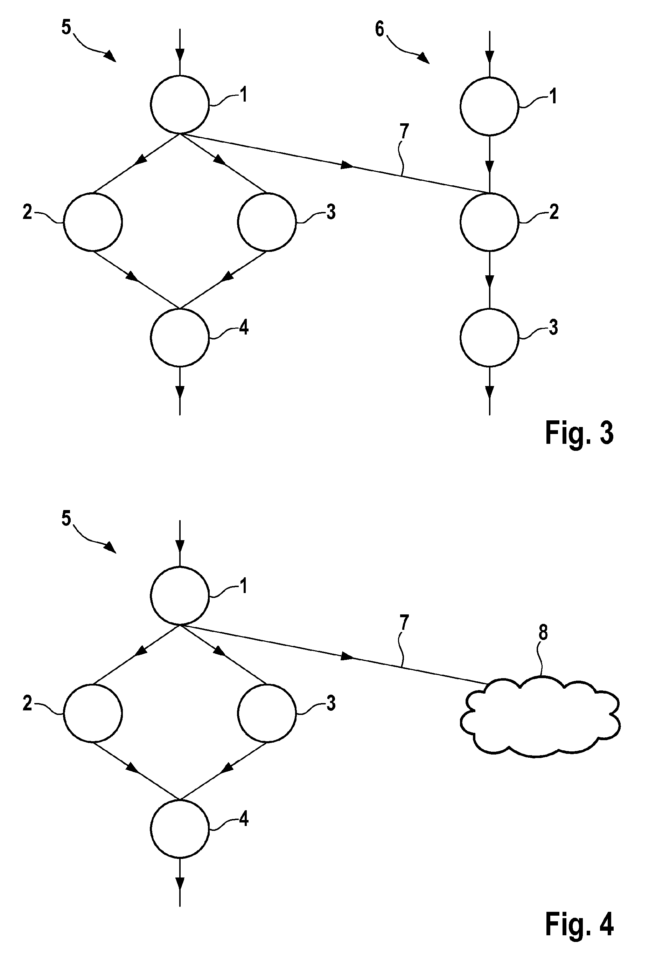

A first such error is best explained referencing Figure 3, depicting an incorrect transition 7 from node 1 of thread 5 to node 2 of thread 6. When the monitoring code is called, it makes a call to the operating system or task scheduler in order to find out which thread 5, 6 called it. Since the calling thread 6 found via the OS differs from the thread 5 reported in the call to the monitor, the incorrect transition 7 has been discovered. The monitor further knows that the thread in error is the thread 6 reported by the OS and not the thread 5 in the call to the monitor.

Figure 4 illustrates a second error where there is some code 8 that contains no calls to the monitor, for example, commonly used library code 8. An error in flow control of the monitored code that incorrectly causes the library code 8 to be entered will not at first result in the monitor detecting an error.

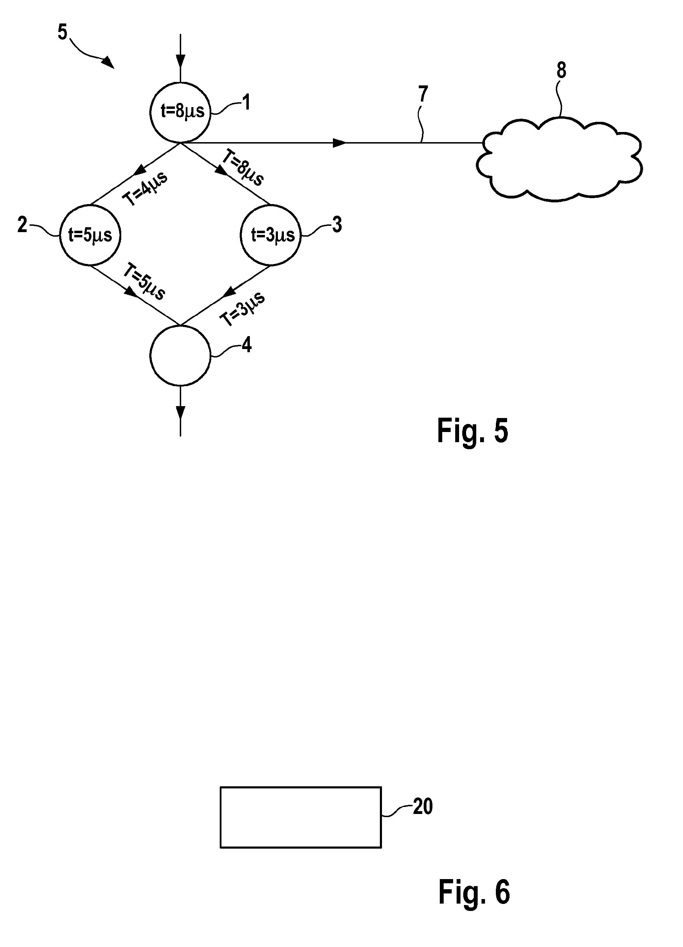

To take account of this class of errors, when the digraph is created, some method - either analysis or measurement - is used to assign a worst-case execution time (WCET) T to each arc in the digraph and the worst WCET t for all arcs leaving a node 1, 2, 3, 4 is assigned to that node 1, 2, 3, 4. This is shown in Figure 5.

When the monitor is called two things happen, assuming that the first error has not occurred: First, the monitor knows which arc was taken and therefore knows the WCET T for that arc and can verify that this was not exceeded. Second, a timer is set up, to expire in the future, at a time equal to "now" + the time t stored at the node 1, 2, 3, 4. If the timer expires then it is known that none of the arcs valid at that particular node 1, 2, 3, 4 was taken and that the thread 5, 6 is in error. When OS pre-emptions take place, the timer needs to be stopped and resumed when the thread 5, 6 resumes. This allows the second error to be detected.

This method 10 may be implemented, for example, in software or hardware or a hybrid of software and hardware, for example in an electronic control unit 20 as the schematic diagram of Figure 6 illustrates.

## Claims

1. Method (10) for monitoring a control flow of an imperative computer program comprising threads (5, 6) of execution),
**characterized in that**
- the program is annotated (11) with calls to a monitor, each call by a thread (5, 6) indicating the thread (5, 6),
- the program and the monitor are scheduled for execution (12) by an operating system, and,
- upon receiving the call, the monitor verifies (13) the thread (5, 6) by means of the operating system.

2. Method (10) according to claim 1,
**characterized in that**
- the program comprises basic blocks of execution with predetermined transitions (7) between the blocks,
- when the program is annotated (11), a control flow graph is created for each thread (5, 6), the graph comprising nodes (1, 2, 3, 4) representing the blocks and arcs representing the transitions (7),
- the monitor stores the graph,
- each call from a block further indicates the block,
- upon receiving at least two subsequent calls, the monitor detects the transition (7) between the blocks, and
- the monitor matches the transition (7) to an arc.

3. Method (10) according to claim 2,
**characterized in that**
- when the graph is created, a worst-case execution time (t) of a block is assigned to the node (1, 2, 3, 4) representing the block,
- upon verifying the thread (5, 6), the monitor times the execution (12) of the thread (5, 6), and
- the monitor verifies the execution time (t).

4. Method (10) according to claim 3,
**characterized in that**
- the execution (12) is timed by means of a programmable interval timer and
- the execution time (t) is verified unless the timer times out.

5. Method (10) according to claim 4,
**characterized in that**,
- if the operating system pre-empts the thread (5, 6), the monitor pauses the timer and,
- when the operating system continues the thread (5, 6), the monitor resumes the timer.

6. Method (10) according to any of claims 3 to 5,
**characterized in that**
- prior to assigning the execution time (t) to the node (1, 2, 3, 4), a worst-case execution time (T) of each transition (7) from the block is assigned to the arc representing the respective transition (7) and
- the execution time (t) assigned to the node (1, 2, 3, 4) at least equals the execution time (T) of each transition (7).

7. Method (10) according to claim 6,
**characterized in that**
the execution time (T) is assigned to the arc using at least one of the following methods:
- an analysis of the program or
- a profile of the execution (12).

8. Computer program adapted to perform the method (10) according to any of claims 1 to 7.

9. Machine-readable storage medium storing the computer program according to claim 8.

10. Apparatus (20) adapted to perform the method (10) according to any of claims 1 to 7.
